# EUROPÄISCHE PATENTSCHRIFT

(11) **EP 2 055 426 B1**
(45) Veröffentlichungstag und Bekanntmachung des Hinweises auf die Patenterteilung: **08.09.2021**
(21) Anmeldenummer: 08017671.2
(22) Anmeldetag: 08.10.2008
(51) Int. Cl.: B23P 15/10, F02F 3/02

(54) **Funktionsoptimierte Gestaltung von Kolben-Ringfeldbereichen**
Function optimized configuration of a pistons piston-ring area
Configuration optimisé pour la fonction de la région de segments de piston d'un piston

(30) Priorität: 30.10.2007 DE 102007051711
(43) Veröffentlichungstag der Anmeldung: 06.05.2009
(73) Patentinhaber: KS Kolbenschmidt GmbH, 74172 Neckarsulm (DE)
(72) Erfinder: Gniesmer, Volker, 31061 Alfeld (DE)
(74) Vertreter: Greif, Thomas

(56) Entgegenhaltungen:
- EP-A2- 1 264 980
- DE-A1- 2 832 953
- DE-A1- 4 019 917
- GB-A- 981 862
- JP-A- 60 259 752
- JP-U- 59 107 948
- US-A- 2 407 440
- US-A- 3 521 531
- US-A1- 2003 150 112
- US-A1- 2005 051 128
- None

## Beschreibung

Die Erfindung betrifft einen Kolben mit einem vergrößerten Ringspaltvolumen, der ein Kolbenoberteil und einen Kolbenschaft umfasst. Ein Kolbenboden eines Kolbenoberteils geht umfangsseitig in einen Feuersteg über, an den sich ein zur Aufnahme von Kolbenringen bestimmtes Ringfeld anschließt, in dem die Kolbenringe von Ringstegen beabstandet positioniert sind.

Die Wirtschaftlichkeit einer Brennkraftmaschine wird nicht nur von einem niedrigen Kraftstoffverbrauch, sondern auch von einem möglichst niedrigen Ölverbrauch bestimmt. Ein erhöhter unwirtschaftlicher Ölverbrauch führt zudem zu unerwünschten Verkokungen im Brennraum und am Kolben, verbunden mit erheblichen Folgeschäden. Eine auch als Ölkohle zu bezeichnende Verkokung bildet sich bei höheren Temperaturen auf Bauteilen, die mit kohlestoffhaltigen Verbindungen in Berührung treten. Die nachteiligen Ablagerungen entstehen, sobald es temperaturbedingt nicht zu einer Verbrennung der Öle kommt. Größerer Ölverbrauch verschlechtert zudem die Emmissionen und führt damit zu einer erhöhten Umweltbelastung der Brennkraftmaschine. Der Kraftstoffverbrauch wird wesentlich von der Reibung der Brennkraftmaschine bestimmt. Die Reibleistungsverluste der Brennkraftmaschine sind direkt proportional zur Größe der tragenden Schaftflächen, d.h. des ständig auf Scherung beanspruchten Schmierfilms zwischen dem Kolbenschaft und der Zylinderwand.

Weiterhin ist zu berücksichtigen, dass beim Betrieb der Brennkraftmaschine der von der Kurbelwelle infolge ihrer Drehrichtung abgeschleuderte Schmierstoff weitestgehend auf die Zylinderlaufbahn im Bereich der Gegendruckseite (GDS) des Kolbens gelangt. Das führt dazu, dass sich für die Kolbenringe, insbesondere im Bereich des kolbenschaftseitigen Verdichtungsringes, gegenüber der Druckseite (DS) des Kolbens ein Schmierstoffüberschuß einstellt. Die unterschiedliche Schmierfilmdicke zwischen der Druck- und Gegendruckseite kann die Folge haben, dass der Ölabstreifring beim Abwärtshub des Kolbens den auf der Zylinderbahn der Gegendruckseite haftenden Schmierstoff nicht restlos beseitigen kann. Der verbleibende Schmierstoff verkokt, wodurch der hydrodynamische Schmierfilm gestört und der Verschleiß erhöht wird.

Aus der DE 20 26 272 ist ein Kolben bekannt, bei dem eine im Ringfeld zwischen zwei Kolbenringen angeordnete, das Ringspaltvolumen vergrößernde Ölfangnut dazu vorgesehen ist, die Bildung von Ölkohle im Bereich der Ringstege und dem Feuersteg zu unterbinden. Diese Anordnung der Ölfangnut hat sich bewährt unter der Voraussetzung, dass der Querschnitt der zur Zylnderfläche offenen Nut ausreichend groß gewählt ist. Aus Festigkeitsgründen und unter Berücksichtigung der mechanischen und thermischen Verformung des Kolbens ist die bekannte Ölfangnut auf Kolben heutiger Brennkraftmaschinen mit einer erhöhten spezifischen Leistung nicht anwendbar.

Gemäß der DE 28 32 953 bildet der Kolben einen gestuften Ringsteg, der sich über den Umfang der Ringnut des unteren Kolbenrings erstreckt und folglich ein Ringspaltvolumen zwischen dem Kolben und der gegenüberliegenden Zylinderlaufbahn vergrößert. Damit verbunden verringert sich der Gasdruck des Arbeitsmediums an der kolbenschaftseitigen Flanke des Ölabstreifsrings. Gleichzeitig bildet sich durch das vergrößerte Ringspaltvolumen ein den Druck abbauender Entspannungsraum

Das Dokument EP1264980 offenbart einen Kolben für einen Verbrennungsmotor der zumindest eine Kompressionsringnut zur Aufnahme eines Kompressionsringes und zumindest eine Ölringnut zur Aufnahme eines Ölabstreifringes sowie zumindest eine Aussparung, die in den Ringsteg zwischen der untersten Kompressionsringnut und der obersten Ölringnut ausgebildet ist, aufweist, wobei sowohl die kreisförmige Oberkante als auch die kreisförmige Unterkante der Aussparung gegenüber der Kolben-Mantelfläche zurückgesetzt ist, wobei die Unterkante der Aussparung weiter zurückgesetzt ist als die Oberkante, und wobei die Ölringnut einen unmittelbar an dem Kolben vorgesehenen Anlageabschnitt zur direkten Zusammenwirkung mit dem Ölring und zu dessen Lagepositionierung aufweist.

Bisher bekannte Maßnahmen zur Bildung eines vergrößerten Ringspaltvolumens von Kolben beziehen sich auf rotationssymmetrisch angeordnete Ringsteg-Ausbildungen, die die spezifische Einbausituationen des Kolbens nicht ausreichend berücksichtigen.

Der Erfindung liegt die Aufgabe zugrunde, von einem bekannten Konzept ausgehend einen Kolben zu schaffen, mit dem eine belastungsabhängige Deformation, der Ölverbrauchs sowie der Leckgasdurchtritt reduziert werden kann.

Diese Aufgabe wird erfindungsgemäß durch die Merkmale des unabhängigen Patentanspruchs gelöst.

Zur Herstellung ist ein Verfahren, welches nicht Teil dieser Erfindung ist, vorgesehen, mit dem ein Kolben realisierbar ist, der im Bereich thermisch hochbelasteter und insbesondere mit einer Zylinderwandung zusammenwirkende Bereiche lokale, insbesondere asymmetrisch angeordnete Geometrien einschließt, um gezielt ein vergrößertes Ringspaltvolumen zwischen dem Kolben und der Zylinderwandung herzustellen. Dabei werden in einem Verfahrensschritt in Bereichen thermisch hochbelasteter Zonen in dem Außenprofil des Kolbens gezielt Freiräume schaffende Geometrien wie Aussparungen oder Ausnehmungen eingebracht, um das Ringspaltvolumen zu erweitern. Alternativ oder ergänzend ist dazu vorgesehen, in weiteren Zonen des Außenprofils zusätzlich partiell zurückliegende Bereiche zu schaffen. Diese Maßnahmen werden unter Beachtung eines optimierten Einbau- bzw. Betriebsspiels und Berücksichtigung der sich einstellenden Betriebsbedingungen zwischen dem Kolben und dem zugehörigen Zylinder vorgenommen.

Durch die Verfahrenschritte werden mehrere Vorteile realisiert. Zum einen verbessern diese Maßnahmen die Fähigkeit einer lokalen elastischen Kolbenverformung, wodurch eine unerwünschte belastungsabhängige, auch als Nutwelligkeit bezeichnete Deformation zumindest minimiert werden kann. Zum anderen wird mit der erfindungsgemäßen lokalen Geometrieoptimierung des Außenprofils die Funktionssicherheit des Kolbens verbessert, verbunden mit einem reduzierten Verschleiß sowie einer Erhöhung der Fresssicherheit. Außerdem führen die erfindungsgemäßen, das Ringspaltvolumen vergrößernden Maßnahmen zu einer Reduzierung der motorischen Verbrauchskennwerte für Öl und Leckgasdurchtritt (BlowBy). Weiterhin wird vorteilhaft der sich erfindungsgemäß einstellende Druckausgleich zwischen den Ringstegen verbessert, sowie der Kontaktbereich zwischen Kolben und Innenwandung des Zylinders. Das sich außerdem verbessernde Kontaktverhalten zwischen den Kolbenringen und den Flanken der Kolbenringnuten optimiert die radiale Auflagefläche.

Aus der DE 21 35 757 ist eine Oberflächenbehandlung des Kolbens bekannt, die im Anschluß an die Drehbearbeitung des Kolbens ein Kugelstrahlen vorsieht. Mit diesem Verfahren soll eine Kolbenoberfläche realisiert werden, die sich nach einer kurzen Einlaufzeit auf die gewünschten Toleranzen und/oder Zylinderverformungen einstellt. Nachteilig kann damit keine gezielte lokale Oberflächenbehandlung erfolgen, sondern eine allseitige gleiche, den gewünschten Effekt mindernde Beaufschlagung des Kolben-Außenprofils. Abweichend von der bekannten Lösung schließt die Erfindung eine gezielte lokale Bearbeitung von thermisch hochbelasteten Zonen des Kolbens ein, um so einerseits eine nachteilige Deformation zu unterbinden und andererseits das Ringspaltvolumen gezielt zu vergrößern.

Das Herstellungsverfahren des erfindungsgemäßen Kolbens umfasst mechanische Bearbeitungsschritte des Kolben-Außenprofils. Danach ist für eine erste mechanische Bearbeitung ein Fräsen vorgesehen ist, mit dem lokale Ausnehmungen in den Kolben eingebracht werden. Anschließend ist für die Endbearbeitung ein Feindrehen vorgesehen, wobei das Feindrehen des Außenprofils als Freiformfläche erfolgt, mit dem lokale Vertiefungen, Adaptionen oder zurückliegende Bereiche oder Zonen in das Außenprofil eingebracht werden. Die Bearbeitung zur Außenprofilgestaltung kann in einer Ebene senkrecht zu einer Kolbenachse vorgenommen werden. Die Endbearbeitung des Kolben-Außenprofils erfolgt unter Beachtung eines sich im Betriebszustand einstellenden engen Betriebsspiels zwischen dem Ringfeld und der Zylinderwandung, das einen unmittelbaren Kontakt vermeidet.

Eine bevorzugte Ausgestaltung der Erfindung sieht vor, dass mittels der Verfahrensschritte weitestgehend geometrisch übereinstimmend gestaltete Kolben-Außenprofile im Bereich der Druckseite (DS) und der Gegendruckseite (GDS) geschaffen werden, die sich von den übrigen Außenprofilzonen, insbesondere den kolbenbolzenseitigen Bereichen des Außenprofils unterscheiden. Gemäß den Verfahrensschritten werden insbesondere mit der abschließenden Endbearbeitung die lokalen Adaptionen so angeordnet, um beispielsweise die sich im Betriebszustand einstellenden unterschiedlichen Schmierstoffverhältnisse zwischen den gegenüberliegenden Kolbenseiten zu berücksichtigen. Durch die Anordnung lokaler Geometrien zur Erzielung eines vergrößerten Ringspaltvolumens, können die sich im Betriebszustand einstellenden Verhältnisse beachtet werden und einzelne Zonen angepasst bzw. zueinander unterschiedlich ausgelegt werden. Vorteilhaft ermöglicht das erfindungsgemäße Verfahren das funktionsbedingte Einbau- bzw. Betriebsspiel zwischen dem Kolben und dem Zylinder zu beachten, das sich zwischen den Druckseiten (DS und GDS) und den kolbenbolzenseitigen Bereichen des Kolbens unterscheidet.

Eine weitere vorteilhafte Weiterbildung der Erfindung sieht zur Schaffung von das Ringspaltvolumen vergrößernden Geometrien lokale Ausnehmungen, Aussparungen oder Dellen vor. Diese Maßnahmen werden bevorzugt an dem Kolbenboden im Bereich von Ventiltaschen, dem Feuersteg sowie an einzelnen oder an allen Ringstegen vorgenommen Die vorteilhaft sichelförmig gestalteten Geometrien verbessern die Spülwirkung, wodurch eine Ölkohlebildung vermieden wird. Außerdem sind die Geometrien mittels einer Fräsung kostengünstig in thermisch hochbelasteten Zonen des Kolbens realisierbar.

Die vielfältige Gestaltungsmöglichkeit der Erfindung unterstreichend, bietet es sich an, in einen Wandungsverlauf zumindest eines Ringstegs partiell konzentrierte Rezesse anzuordnen. Alternativ dazu kann eine Nut vorgesehen werden. Unabhängig von der Gestaltung werden diese Maßnahmen vorzugsweise in Bolzenrichtung des Kolbens angeordnet, die eine nachteilige Bewegung des Schmierstoffs oder eines Leckgasdurchtritts (BlowBy) in dieser Richtung unterbindet.

In Weiterbildung der Erfindung weist eine dem Kolbenbolzen benachbarte Kolbenringnut lokal zumindest einen, vorzugsweise als Hohlkehle, Rezess oder Fase gestalteten gerundeten Übergang zu dem zugehörigen Ringsteg auf. Dieses das Volumen im Ringspaltbereich vergrößernde Konzept bewirkt einen zusätzlichen effektiven Druckausgleich. Gleichzeitig ermöglicht diese Ringsteg-Geometrie eine in Bolzenrichtung gewünschte elastische Nutflankenverformung, die sich einer Verformung der Kolben-Druckseite bzw. der Kolben-Gegendruckseite nähert. Elastische, zu einer nachteiligen Welligkeit führende Verformungen der Kolbenringnuten im Betriebszustand werden damit unterbunden, wodurch vorteilhaft auf den Einsatz spezieller Kolbenringe verzichtet werden kann.

Ein Gestaltungsmerkmal der Erfindung sieht vor, zumindest einen Ringsteg lokal oder umlaufend mit einer balligen Stirnseite zu versehen und mit einer lokalen Nut, Ausnehmung, Ausfräsung oder einem Rezess zu kombinieren.

Außerdem kann gemäß einer vorteilhaften Ausgestaltung der Erfindung ein lokal oder umlaufend konischer Verlauf der Stirnseite von zumindest einem Ringsteg vorgesehen werden. Für den die Konizität definierenden Anstellwinkel "α" ist bevorzugt ein Winkelbereich zwischen - 45° bis + 45° gewählt. Zumindest die Grenzwerte des Anstellwinkels bestimmen die Lage des zusätzlichen Ringspaltvolumens, d.h. eine Anordnung im unteren oder oberen Bereich eines zugehörigen Ringstegs.

Weiterhin bezieht sich die Erfindung auf Ausnehmungen, Nuten oder Rezesse, die zueinander konstruktiv unterschiedlich ausgeführt sind zur Darstellung eines vergrößerten Ringspaltvolumens. Angepasst an die jeweilige Einbausituation und die unterschiedlichen Bereiche des Kolbens kann die jeweilige Geometrie in der Tiefe, Höhe oder Breite variabel ausgeführt werden, um eine bedarfsgerechte Auslegung zu erhalten. Dies gilt sowohl für die erfindungsgemäßen Maßnahmen im Bereich der Ringstege als auch in den übrigen Zonen des Kolbens, wie beispielsweise dem Ventiltaschenbereich des Kolbenbodens.

Als eine weitere Ausgestaltung der Erfindung ist vorgesehen, die Ringstege, zumindest jedoch einen Ringsteg in Richtung des Kolbenbolzens abweichend von einer Grundform des Kolbens auszubilden. Durch eine Ringstegausbildung, die beispielsweise der Grundovalität des Kolbens überlagert ist oder eine Grundovalität höherer Ordnung aufweist, ist es möglich, die sich im Betriebszustand einstellenden belastungsabhängigen Deformationen zu berücksichtigen

In Weiterbildung der Erfindung ist ein Einbau- bzw. Betriebsspiels "x" zwischen dem Kolben im Bereich der Ringstege und der Innenwandung des Zylinders unterschiedlich ausgelegt. Das bevorzugt enge Spiel in Bolzenrichtung wird durch die Endbearbeitung der Kolben-Oberfläche so gewählt, dass sich kein den Verschleiß und das Fressen erhöhender, unmittelbarer Kontakt einstellt.

Ausführungsbeispiele der Erfindung werden nachfolgend beschrieben und anhand der Figuren erläutert. Es zeigen:
- Figur 1:: einen Kolben im eingebauten Zustand,
- Figuren 2 bis 5:: Ringsteg- und/oder Feuersteg-Varianten des in Figur 1 abgebildeten Kolbens,
- Figur 6:: in einer Perspektive einen erfindungsgemäßen Kolben.

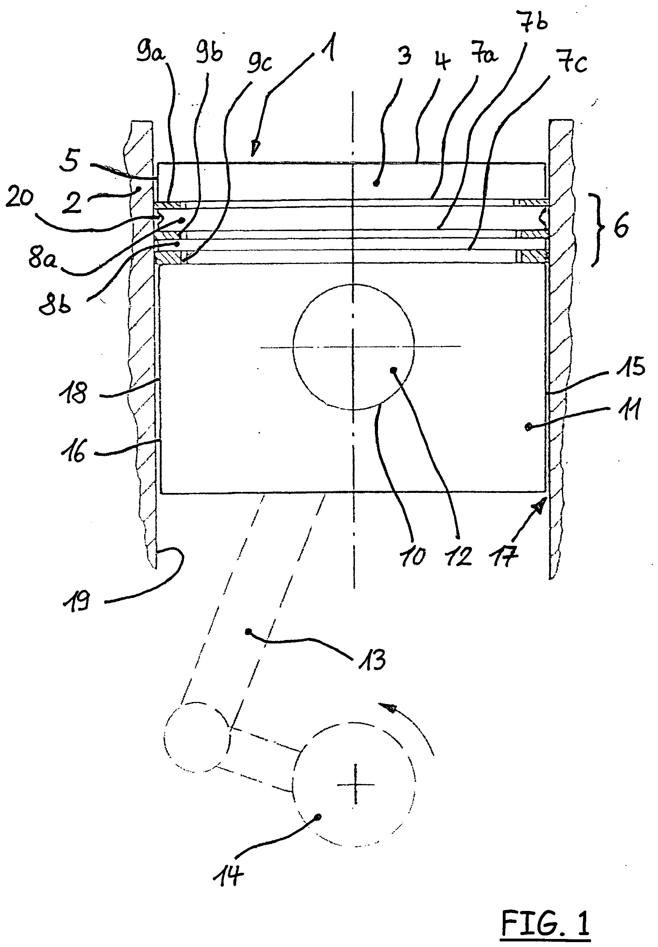

Die Figur 1 zeigt einen Kolben 1 im eingebauten Zustand, wobei der Kolben 1 in einem im Schnitt gezeichneten Zylinder 2 in einer Seitenansicht auf eine Nabenbohrung dargestellt ist. Der Kolben 1 bildet in einem Kolbenoberteil 3 einen Kolbenboden 4, der außenseitig in einen Feuersteg 5 übergeht, an den sich ein Ringfeld 6 anschließt, das Ringnuten 7a bis 7b zur Aufnahme von durch Ringstege 8a, 8b getrennten Kolbenringen 9a bis 9c bildet. Ein zwei diametral gegenüberliegende Nabenbohrungen 10 aufweisender Kolbenschaft 11 schließt sich an das Ringfeld 6 an. Über einen in die Nabenbohrungen 10 eingesetzten Kolbenbolzen 12 ist der Kolben 1 mit einem Pleuel 13 gelenkig verbunden, wobei das Pleuel 13 eine Verbindung zu einer Kurbelwelle 14 herstellt. Bedingt durch die sich im Gegenuhrzeigersinn drehende Kurbelwelle 14 stellt sich eine Druckseite (DS) 15 sowie eine Gegendruckseite (GDS) 16 des Kolbens 1 ein. Als Maßnahme zur Vergrößerung eines Ringspaltvolumens 17 zwischen einem Außenprofil 18 des Kolbens 1 und einer Innenwandung 19 ist in dem Ringsteg 8a eine Ausnehmung 20 eingebracht.

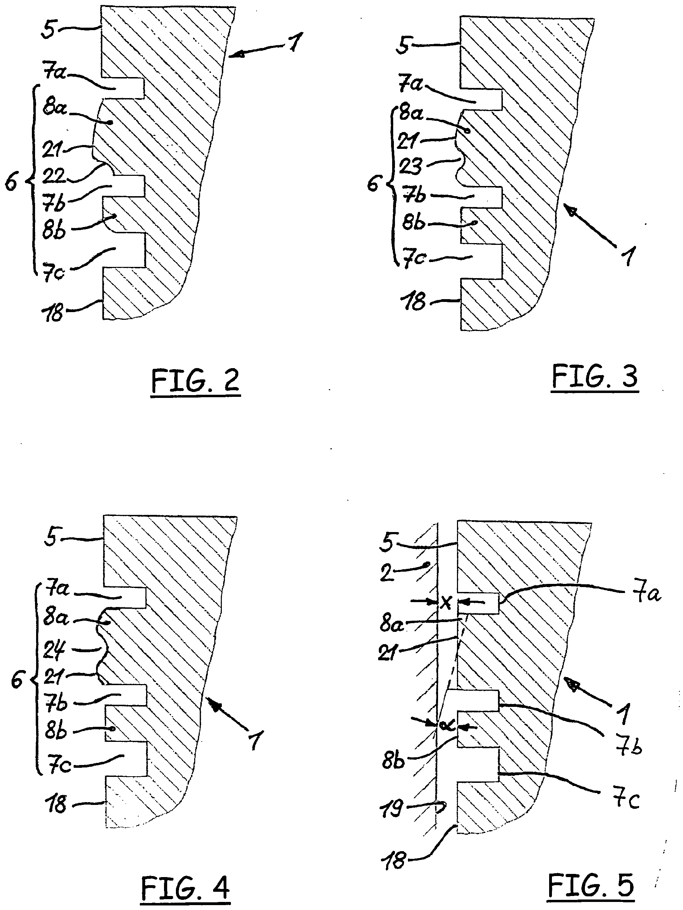

Die Figuren 2 bis 5 zeigen in einem vergrößerten Maßstab einen sich auf das Ringfeld 6 und den Feuersteg 5 begrenzenden Ausschnitt des Kolbens 1, wobei diese Figuren unterschiedliche Varianten zeigen, um das Ringspaltvolumen zu vergrößern.

Gemäß der Figur 2 umfasst das Außenprofil 18 des Kolbens 1 kolbenbolzenseitig einen Ringsteg 8a mit einer ballig gestalteten Stirnseite 21 bzw. Außenkontur, die in einem Übergangsbereich zu der Ringnut 7b eine als Rezess 22 gestaltete Ausnehmung oder eine sichelförmig ausgebildete Einfräsung aufweist. Sowohl die ballige Ringstegkontur als auch der Rezess 22 sind bevorzugt lokal angeordnet, wobei die Maßnahmen auch wechselweise zueinander positionierbar sind. Weiterhin bildet die Ringnut 7c des Kolbens 1 zumindest einen lokal gerundeten Übergang zu dem Ringsteg 8b. Alternativ dazu bietet es sich an, dass einer oder beide Ringstege 8a, 8b an den Bolzenseiten ballig und übrige Ringstegbereiche lokal einen Rezess 22 und/oder eine sichelförmige Einfräsung aufweisen.

Die Figur 3 zeigt den Ringsteg 8a mit einer mittig eingebrachten Nut 23, die bevorzugt kolbenbolzenseitig in dem Ringsteg 8a angeordnet ist. Die Stirnseite 21 kann ergänzend oder alternativ zu der Nut 23 ballig oder konisch gestaltet werden. Außerhalb des Kolbenbolzenbereichs bietet es sich an, den Ringsteg 8a partiell ballig zu gestalten oder mit der Nut 23 zu versehen.

Das Ausführungsbeispiel gemäß Figur 4 zeigt den Ringsteg 8a mit einer sich über einen weiten Bereich erstreckenden gerundeten, auch als Delle zu bezeichnenden Ausnehmung 24, die ebenfalls lokal eingebracht mit einer ballig oder konisch ausgebildeten Stirnseite 21 kombinierbar ist.

In der Ausgestaltung der Figur 5 ist dem Kolbenausschnitt ein Ausschnitt des Zylinders 2 zugeordnet, zwecks Verdeutlichung eines Betriebsspiels "x" zwischen der Innenwandung 19 und dem Außenprofil 18. Das kolbenbolzenseitig möglichst enge Betriebsspiels "x" wird so ausgelegt, dass ein unmittelbarer Kontakt zwischen dem Kolben 1 und dem Zylinder 2 unterbleibt. Weiterhin ist der Ringsteg 8a mit einer konisch ausgerichtet verlaufenden Stirnseite 21 versehen. Der Winkel "α", der die Konizität definiert kann in einem Bereich zwischen + 45° und - 45° ausgelegt werden.

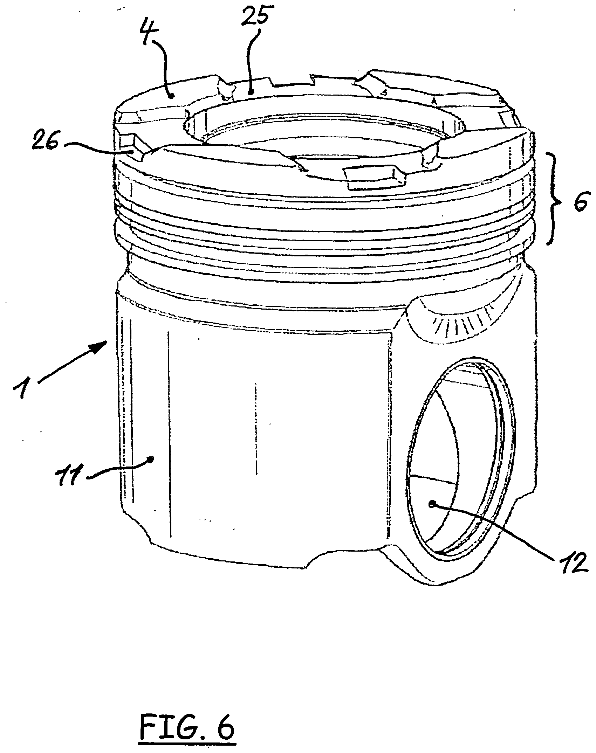

Der in einer Perspektive abgebildete Kolben 1 in Figur 6 bildet im Bereich des Kolbenbodens 4 vier umfangsverteilt angeordnete Ventiltaschen 25, denen jeweils eine Ausnehmung 26 zugeordnet ist. Die symmetrisch umfangsverteilt angeordneten, das Ringspaltvolumen vergrößernden, sichelförmig gestalteten Ausnehmungen 26 sind bevorzugt mittels einer Fräsung in den Kolben 1 eingebracht.

### Bezugszeichenliste

- 1: Kolben
- 2: Zylinder
- 3: Kolbenoberteil
- 4: Kolbenboden
- 5: Feuersteg
- 6: Ringfeld
- 7a: Ringnut
- 7b: Ringnut
- 7c: Ringnut
- 8a: Ringsteg
- 8b: Ringsteg
- 9a: Kolbenring
- 9b: Kolbenring
- 9c: Kolbenring
- 10: Nabenbohrung
- 11: Kolbenschaft
- 12: Kolbenbolzen
- 13: Pleuel
- 14: Kurbelwelle
- 15: Druckseite
- 16: Gegendruckseite
- 17: Ringspaltvolumen
- 18: Außenprofil
- 19: Innenwandung
- 20: Ausnehmung
- 21: Stirnseite
- 22: Rezess
- 23: Nut
- 24: Ausnehmung
- 25: Ventiltaschen
- 26: Ausnehmung

## Patentansprüche

1. Kolben, mit einem vergrößerten Ringspaltvolumen (17), der ein Kolbenoberteil (3) und einen Kolbenschaft (11) umfasst, wobei ein Kolbenboden (4) des Kolbenoberteils (3) umfangsseitig in einen Feuersteg (5) übergeht, an den sich ein zur Aufnahme von Kolbenringen (9a-9c) bestimmtes Ringfeld (6) anschließt, in dem die Kolbenringe (9a-9c) von Ringstegen (8a,8b) beabstandet positioniert sind, wobei unterschiedlich geometrisch gestaltete gefräste Ausnehmungen lokal in oder an dem Kolben (1) eingebracht sind, wobei weiterhin ein Außenprofil (18) als Freiformfläche mittels eines Feindrehens gestaltet ist, bei dem zusätzliche lokale Vertiefungen in das Außenprofil (18) eingebracht werden, deren Lage und/oder Geometrie sich von den gefrästen Ausnehmungen unterscheiden, wobei zumindest ein Ringsteg (8a,8b) eine lokale oder umlaufende ballige Stirnseite (21) in Kombination mit einer lokalen Nut (23), Ausnehmung (20) oder einem Rezess (22) umfasst.

2. Kolben nach Anspruch 1, **dadurch gekennzeichnet, dass** das auf einer Druckseite (15) und einer Gegendruckseite (16) übereinstimmend gestaltete Außenprofil (18) des Kolbens (1) sich von den übrigen Zonen, insbesondere kolbenbolzenseitigen Bereichen des Außenprofils (18) unterscheidet.

3. Kolben nach Anspruch 1 oder 2, **dadurch gekennzeichnet, dass** im Bereich des Kolbenbodens (4), des Feuerstegs (5) sowie zumindest eines Ringstegs (8a,8b) lokale, insbesondere sichelförmig gestaltete Ausnehmungen eingebracht sind.

4. Kolben nach einem der Ansprüche 1 bis 3, **dadurch gekennzeichnet, dass** zumindest ein Ringsteg (8a,8b) partiell oder umlaufend einen als Rezess (22) gestalteten Wandungsverlauf aufweist.

5. Kolben nach einem der Ansprüche 1 bis 4, **dadurch gekennzeichnet, dass** der Kolbenschaft (11) und/oder zumindest ein Ringsteg (8a,8b) eine umlaufende oder umfangsbegrenzt verlaufende, insbesondere als Zürnernut gestaltete Nut (23) umfasst.

6. Kolben nach einem der Ansprüche 1 bis 5, **dadurch gekennzeichnet, dass** zumindest eine einem Kolbenbolzen (12) benachbarte Ringnut (7c) des Kolbens (1) einen gerundeten Übergang zu dem zugehörigen Ringsteg (8b) aufweist.

7. Kolben nach einem der Ansprüche 1 bis 6, **dadurch gekennzeichnet, dass** die Stirnseite (21) von zumindest einem Ringsteg (8a,8b) lokal oder umlaufend konisch verläuft.

8. Kolben nach Anspruch 7, **dadurch gekennzeichnet, dass** die Stirnseite (21) von zumindest einem Ringsteg (8a,8b) partiell oder umlaufend unter einem Anstellwinkel "α" verläuft, der in einem Bereich zwischen - 45 ° bis + 45 ° ausgelegt werden kann.

9. Kolben nach einem der vorhergehenden Ansprüche, **dadurch gekennzeichnet, dass** eine konstruktive Ausgestaltung der Ausnehmung (20), der Nut (23) oder von dem Rezess (22) abhängig von der Einbaulage in der Tiefe, Höhe oder Breite unterschiedlich ausführbar sind.

10. Kolben nach einem der vorhergehenden Ansprüche, **dadurch gekennzeichnet, dass** zumindest ein Ringsteg (8a,8b) eine abweichend zu einer Grundform des Kolbens (1) überlagerte Grundovalität aufweist.

11. Kolben nach einem der vorhergehenden Ansprüche, **dadurch gekennzeichnet, dass** ein Einbau- bzw. Betriebsspiels "x" zwischen dem Kolben (1) im Bereich der Ringstege (8a,8b) und der Zylinderwand sich umfangsseitig verändert.

## Claims

1. Piston, having an enlarged annular-gap volume (17), which comprises a piston upper part (3) and a piston skirt (11), wherein a piston crown (4) of the piston upper part (3) transitions peripherally into a fire land (5) which is adjoined by a ring zone (6) which is intended to receive piston rings (9a-9c) and in which the piston rings (9a-9c) are positioned in a manner spaced apart by annular lands (8a, 8b), wherein milled recesses of different geometric design have been introduced locally into or onto the piston (1), wherein, furthermore, an external profile (18) is designed as a freeform surface by means of precision turning, in which additional local recesses are introduced into the external profile (18), the position and/or geometry of which recesses differ from the milled cutouts, wherein at least one annular land (8a, 8b) comprises a local or circumferential crowned end face (21) in combination with a local groove (23), cutout (20) or a recess (22).

2. Piston according to Claim 1, **characterized in that** the external profile (18), designed in a corresponding manner on a pressure side (15) and a counter pressure side (16), of the piston (1) differs from the other zones, in particular piston-pin-side regions of the external profile (18).

3. Piston according to Claim 1 or 2, **characterized in that** local cutouts, in particular of crescent-shaped design, have been introduced in the region of the piston crown (4), of the fire land (5) and at least of one annular land (8a, 8b).

4. Piston according to one of Claims 1 to 3, **characterized in that** at least one annular land (8a, 8b) has, partially or circumferentially, a wall profile designed as a recess (22).

5. Piston according to one of Claims 1 to 4, **characterized in that** the piston skirt (11) and/or at least one annular land (8a, 8b) comprises a groove (23) that is circumferential or extends in a peripherally limited manner and is designed in particular as a Zürner groove.

6. Piston according to one of Claims 1 to 5, **characterized in that** at least one annular groove (7c), adjacent to a piston pin (12), of the piston (1) has a rounded transition to the associated annular land (8b).

7. Piston according to one of Claims 1 to 6, **characterized in that** the end face (21) of at least one annular land (8a, 8b) extends in a locally or circumferentially conical manner.

8. Piston according to Claim 7, **characterized in that** the end face (21) of at least one annular land (8a, 8b) extends partially or circumferentially at a setting angle "α" that can be designed to be in a range between -45° and +45°.

9. Piston according to one of the preceding claims, **characterized in that** a structural configuration of the cutout (20), of the groove (23) or of the recess (22) is able to be embodied differently depending on the installation position in terms of depth, height or width.

10. Piston according to one of the preceding claims, **characterized in that** at least one annular web (8a, 8b) has a basic ovality that is superimposed in a manner differing from a basic shape of the piston (1).

11. Piston according to one of the preceding claims, **characterized in that** an installation or operating clearance "x" between the piston (1) in the region of the annular lands (8a, 8b) and the cylinder wall changes peripherally.

## Revendications

1. Piston, ayant un volume de fente annulaire agrandi (17), qui comporte une partie supérieure de piston (3) et une tige de piston (11), un fond de piston (4) de la partie supérieure de piston (3) étant suivi sur la périphérie par un coup de feu (5), auquel un champ annulaire (6) destiné à la réception de segments de piston (9a-9c) se raccorde, dans lequel les segments de piston (9a-9c) sont positionnés de manière espacée par des nervures annulaires (8a, 8b), des évidements fraisés de configuration géométrique différente étant aménagés localement dans ou sur le piston (1), un profil extérieur (18) étant en outre configuré en tant que surface de forme libre au moyen d'un usinage au tour de précision, lors duquel des creux locaux supplémentaires sont aménagés dans le profil extérieur (18), dont la position et/ou la géométrie diffèrent des évidements fraisés, au moins une nervure annulaire (8a, 8b) comportant un côté frontal local ou circonférentiel bombé (21) en combinaison avec une rainure locale (23), un évidement (20) ou un retrait (22).

2. Piston selon la revendication 1, **caractérisé en ce que** le profil extérieur (18) du piston (1) configuré de manière coïncidente sur un côté de pression (15) et un côté de contre-pression (16) diffère des zones restantes, notamment de zones côté axe de piston du profil extérieur (18).

3. Piston selon la revendication 1 ou 2, **caractérisé en ce que** des évidements locaux, notamment configurés en forme de croissant, sont aménagés dans la zone du fond de piston (4), du coup de feu (5), ainsi que d'au moins une nervure annulaire (8a, 8b).

4. Piston selon l'une quelconque des revendications 1 à 3, **caractérisé en ce qu'**au moins une nervure annulaire (8a, 8b) présente en partie ou en circonférence une étendue de paroi configurée en tant que retrait (22).

5. Piston selon l'une quelconque des revendications 1 à 4, **caractérisé en ce que** la tige de piston (11) et/ou au moins une nervure annulaire (8a, 8b) comporte une rainure (23) circonférentielle ou s'étendant de manière limitée sur la circonférence, notamment configurée en tant que rainure Zürner.

6. Piston selon l'une quelconque des revendications 1 à 5, **caractérisé en ce qu'**au moins une rainure annulaire (7c) du piston (1) voisine d'un axe de piston (12) présente une transition arrondie vers la nervure annulaire correspondante (8b).

7. Piston selon l'une quelconque des revendications 1 à 6, **caractérisé en ce que** le côté frontal (21) d'au moins une nervure annulaire (8a, 8b) s'étend localement ou circonférentiellement sous forme conique.

8. Piston selon la revendication 7, **caractérisé en ce que** le côté frontal (21) d'au moins une nervure annulaire (8a, 8b) s'étend partiellement ou circonférentiellement à un angle d'inclinaison « α », qui peut être dimensionné dans une plage allant de -45° à +45°.

9. Piston selon l'une quelconque des revendications précédentes, **caractérisé en ce qu'**une configuration constructive de l'évidement (20), de la rainure (23) ou du retrait (22) peut être réalisée différemment en profondeur, hauteur ou largeur en fonction de la position de montage.

10. Piston selon l'une quelconque des revendications précédentes, **caractérisé en ce qu'**au moins une nervure annulaire (8a, 8b) présente une ovalité de base superposée à une forme de base du piston (1) de manière divergente.

11. Piston selon l'une quelconque des revendications précédentes, **caractérisé en ce qu'**un jeu de montage ou d'exploitation « x » entre le piston (1) dans la zone des nervures annulaires (8a, 8b) et la paroi de cylindre se modifie sur la circonférence.
